# EUROPEAN PATENT SPECIFICATION

(11) **EP 0 599 949 B1**
(45) Date of publication and mention of the grant of the patent: **15.01.1997**
(21) Application number: 92917955.4
(22) Date of filing: 18.08.1992
(51) Int. Cl.: H04N 3/15

(54) **SOLID STATE IMAGING DEVICE**
Festkörperbildaufnahmevorrichtung
DISPOSITIF D'IMAGERIE A SEMI-CONDUCTEURS

(30) Priority: 19.08.1991 GB 91178376
(43) Date of publication of application: 08.06.1994
(73) Proprietor: VLSI VISION LIMITED, Edinburgh EH12 8BD (GB)
(72) Inventor: DENYER, Peter, Brian, Edinburgh EH10 5DF (GB); RENSHAW, David, Edinburgh EH9 1AS (GB); WANG, Guoyu, Edinburgh EH9 2NR (GB); LU, Mingying, Edinburgh EH9 2NR (GB)
(74) Representative: Szczuka, Jan Tymoteusz
(86) International application number: GB9201522
(87) International publication number: WO9304556

(56) References cited:
- FR-A- 2 538 652
- US-A- 5 027 217
- PROCEEDINGS OF THE IEEE 1990 CUSTOM INTEGRATED CIRCUITS CONFERENCE 16 May 1990, BOSTON US pages 731 - 734 RENSHAW.D 'asic vision'

## Description

The present invention relates to solid state imaging or image pick-up devices and in particular to such devices provided with electronic exposure control means.

It is known that exposure control in apparatus incorporating solid state image pick-up devices can be realised electronically - rather than mechanically using iris means - by varying the integration time of the sensor cells i.e. the period of time after resetting of the sensor cells during which they are exposed to light before they are sampled. The arrangements previously used for varying the integration time have though been relatively complex and cumbersome including, for example, the use of multiple vertical shift registers.

Such a system is described in US-A-5 027 217.

It is an object of the present invention to avoid or minimise one or more of the above disadvantages.

The present invention provides a solid state image pick-up device comprising a two-dimensional array of sensing cells, each sensing cell having a photodiode and a transistor for reading from and writing to the photodiode, horizontal and vertical scanning means coupled to each cell of the array, wherein said vertical scanning means comprises a plurality of vertical scanning lines, each commonly connected to sensing cells arranged in a horizontal direction, and vertical shift register means having outputs connected to the vertical scanning lines for driving the vertical scanning lines with control pulses so as to cause each line to be successively reset and then sampled after a variable period defining an integration time, characterised in that the vertical shift register means comprises a single vertical shift register formed and arranged to be driven with an input so as to drive a group of successive vertical scanning lines during each line period, and there are provided global reset and sample signal driven means connected to each of said lines via a decode cell, each said decode cell being connected to the decode cells of preceding and succeeding lines, said decode cells being formed and arranged so that the leading line of the group of lines being reset is sampled, the number of lines in the group being reset determining the number of lines in a group ahead of the sampled line which are not being reset and hence the integration time, whereby the integration time may be varied by variation of the input to the vertical shift register.

The present invention also provides a method of automatically electronically controlling exposure according to claim 5.

With a solid state image pick-up device of the present invention it is possible to control exposure electronically in a simple and economic manner with only one vertical shift register thereby minimising the overall size and hence area of circuitry required on the integrated circuit semi-conductor chip and hence facilitating maximal miniaturisation of the device.

It will be appreciated that various combinations of logic gates may be used to realise the decode cell, including arrangements with as few as four logic gates as will be further described hereinbelow.

Further preferred features and advantages of the present invention will appear from the following detailed description given by way of example of a preferred embodiment illustrated with reference to the accompanying drawings in which:
Fig. 1 is a general schematic plan view of a solid state image pick-up device of the type disclosed in our earlier International Patent Publication No. WO-A-91/04633;
Fig. 2 is a detail view showing part of the vertical shift register of the device of Fig. 1 with associated decode cells and connections thereto;
Fig. 3 is a schematic representation of the status of the various lines in the device of Figs. 1 and 2 at any given time;
Fig. 4 is a detail view showing the internal architecture of an individual decode cell;
Figs. 5 to 7 showing waveforms for the vertical shift register input, the reset signal, and a comparison of the waveforms for different lines at any given time; and
Fig. 8 illustrates a suitable control algorithm for exposure control.

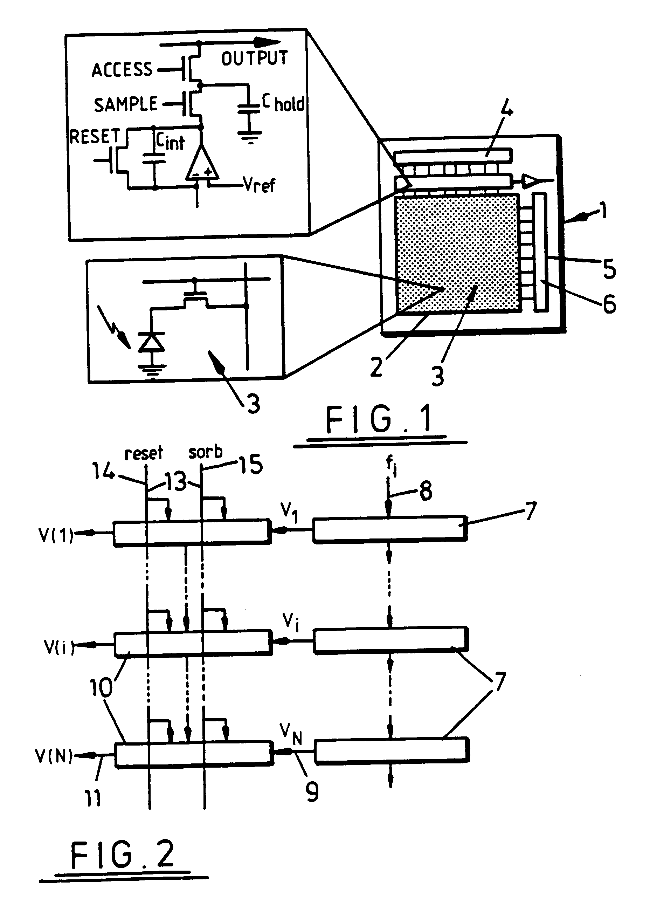

Fig. 1 shows a solid state image pick-up device 1 comprising a two-dimensional array 2 of sensing cells 3 coupled to horizontal and vertical scanning means 4 and 5, respectively. The vertical scanning means comprises a vertical shift register 6 containing a plurality of vertical shift register cells 7 having a common input line 8 for receiving input signals fᵢ and each connected 9 via a respective decode cell 10 to a vertical scanning line 11 connected in turn to a horizontal row 12 of sensing cells 3 (see Fig. 1). Each of the decode cells 10 is also commonly connected 13 to global reset and sampling lines 14 and 15, respectively.

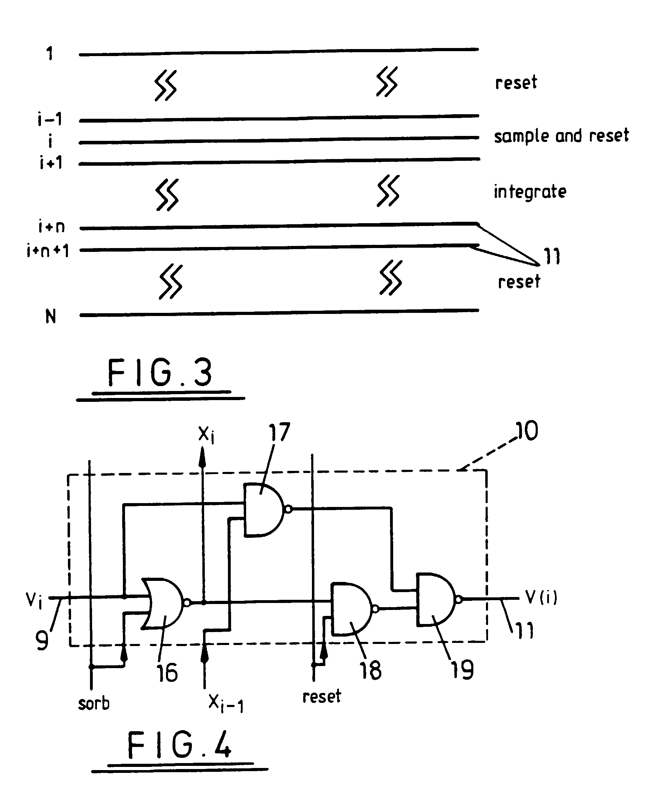

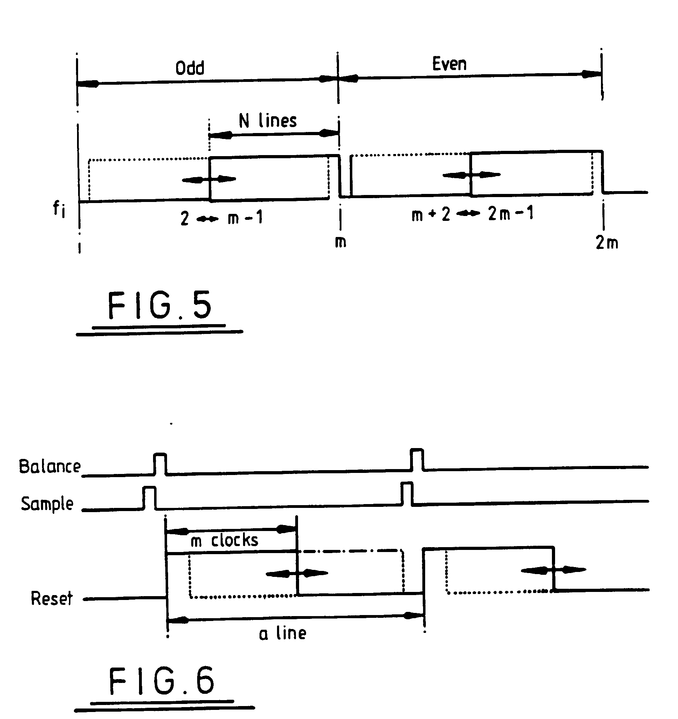

The vertical shift register input signal fᵢ is made up of a block of reset control pulses for enabling resetting of a number of the vertical scanning lines 11 - lines i+n+1 to N and 1 to i leaving lines i+1 to i+n "integrating" i.e. "recording" the light falling on them until they are sampled - see Fig. 3. As shown in Fig. 5 the number of pulses in the block may be varied so that at any given moment any number from just one to all of the lines are reset - corresponding to maximum number of lines "integrating" and hence maximum integration period resulting in maximum exposure and vice versa respectively. As shown in Figs. 2 and 4, all the lines 11 receive a reset signal via the global reset line 14. Only those lines 11 receiving control reset signals via the respective vertical shift register cells 7 are however actually reset.

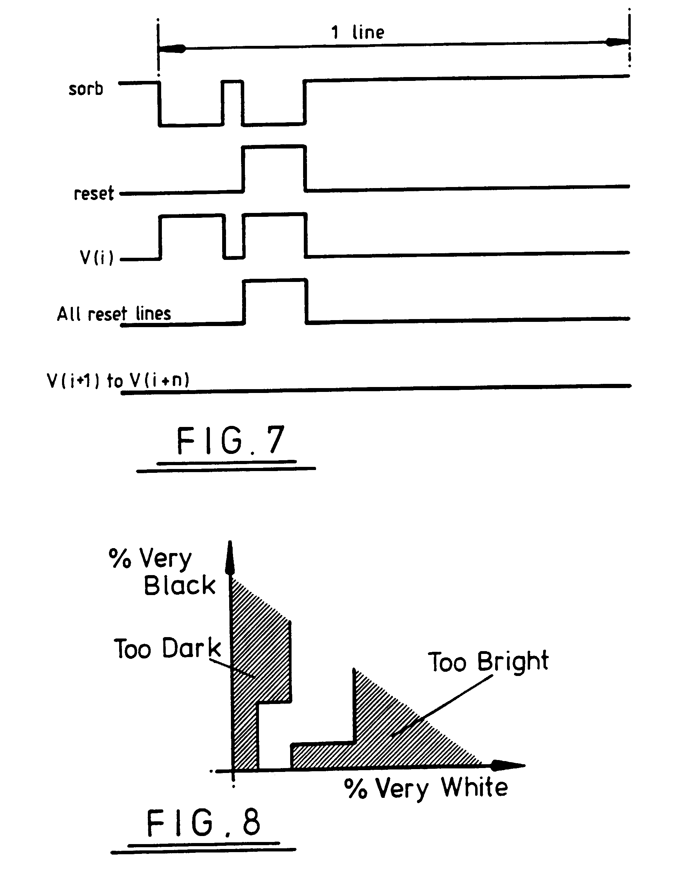

As may be seen from Fig. 7, the sample signal received via the global sampling line 15, is timed ahead of the reset signal received via the global reset line 14 so that the sampled line i is sampled prior to being reset. The decode cell 10 is formed and arranged so that whilst all the lines 11 receive a sample signal via the global sampling line 15, only line i, the first line in the block of lines being reset is actually sampled.

Fig. 4 shows one particular way of realizing the above arrangement. In more detail the decode cell comprises a NOR gate 16 and three NAND gates 17, 18, 19. The NOR gate 16 monitors the presence of a reset control signal from the respective vertical shift register cell 7 and provides an output X, to the first NAND gate 17 of the decode cell 10 of the next vertical scanning line i+1 and to a second NAND gate of the decode cell of line i. Thus the first NAND gate 17 of each decode cell 10 compares the "reset" status of the present line i and the previous line i-1, the leading edge of the block of "reset" lines corresponding to the absence of "reset" status on the present line (at the time of sampling - see below) and presence of "reset" status on the previous line. The third NAND gate 19 then uses the output of the second NAND gate 18 to enable sampling only at that line i at the leading edge of the block of "reset" lines. In this way sampling and then resetting of a variable number of lines (corresponding to variable exposure times) can be controlled simply by means of providing blocks of reset control pulses of variable size through the vertical shift register. It will of course be appreciated that Fig. 4 represents only one way of achieving the desired control of sampling using global sampling and reset inputs and control pulse inputs via the (single) vertical shift register and that various other forms of decode cell may also be used.

By means of the above arrangement a relatively wide range of different exposure values may be achieved depending on the total number of vertical scanning lines used. An even greater degree of exposure control allowing particularly short exposure times may be achieved by varying the length of the actual reset signal as shown in Fig. 6. It will be appreciated that by shortening the reset signal (but still maintaining the same starting time) in line i+1 where this is the next line to be sampled (i.e. the block of reset control pulses covers the maximum number of lines) then the length of the relatively short integration period available before sampling, can be varied thereby providing an additional dimension in exposure variation.

The actual values which should be used to set the exposure times (via the number of lines to be reset and/or the length of the reset pulses) may be readily determined by any suitable means including for example measurement of grey level histograms of previous images and/or measuring the percentages of pixels with values above or below two or more grey scale thresholds, and then comparing these against predetermined criteria. One example of a suitable system is illustrated with reference to Fig. 8 which is an automatic exposure control decision diagram. In this case the video stream is internally histogrammed by pixel brightness into three bins: very white, average, and very black. Where the image is found to be nearly all black it is judged to be too dark and the exposure increased. Conversely when the image is found to be nearly all white it is judged to be too bright and the exposure reduced.

In a further aspect the present invention provides a method of automatically electronically controlling exposure in a solid state image pick-up device comprising a two-dimensional array of sensing cells, each sensing cell having a photodiode and a transistor for reading from and writing to the photodiode, horizontal and vertical scanning means coupled to each cell of the array, wherein said vertical scanning means comprises a plurality of vertical scanning lines, each commonly connected to sensing cells arranged in a horizontal direction, and vertical shift register means having outputs connected to the vertical scanning lines for driving the vertical scanning lines with control pulses so as to cause each line to be successively reset and then sampled after a variable period defining an integration time, which method comprises the steps of providing an input to the vertical shift register so as to drive a group of successive vertical scanning lines with control signals for enabling resetting thereof during each line period, providing global sampling and reset signals to all the vertical scanning lines, and processing the signals received at each line so as to enable sampling of a vertical scanning line at the leading edge of said group of successive vertical scanning lines, monitoring the image obtained with said pick-up device and varying said input to the vertical shift register so as to increase or decrease the number of lines in said group of successive vertical scanning lines thereby to decrease or increase the integration period of the vertical scanning lines, respectively.

As used herein the "line period" is the period required to sample a line and progress to the next line to be sampled.

It will be noted from Fig. 7 that the global sample signal is transmitted ahead of the global reset signal so that when the present line "reset status" input to the first NAND gate 17 is 'read' to determine enabling or non-enabling of sampling, the "reset status " for the present line will be effectively that from the previous line period.

## Claims

1. A solid state image pick-up device comprising a two-dimensional array of sensing cells, each sensing cell having a photodiode and a transistor for reading from and writing to the photodiode, horizontal and vertical scanning means coupled to each cell of the array, wherein said vertical scanning means comprises a plurality of vertical scanning lines, each commonly connected to sensing cells arranged in a horizontal direction, and vertical shift register means having outputs connected to the vertical scanning lines for driving the vertical scanning lines with control pulses so as to cause each line to be successively reset and then sampled after a variable period defining an integration time, characterised in that the vertical shift register means comprises a single vertical shift register formed and arranged to be driven with an input so as to drive a group of successive vertical scanning lines during each line period, and there are provided global reset and sample signal driven means connected to each of said lines via a decode cell, each said decode cell being connected to the decode cells of preceding and succeeding lines, said decode cells being formed and arranged so that the leading line of the group of lines being reset is sampled, the number of lines in the group being reset determining the number of lines in a group ahead of the sampled line which are not being reset and hence the integration time, whereby the integration time may be varied by variation of the input to the vertical shift register.

2. A device as claimed in claim 1 wherein the decode cells comprise a NOR gate and three NAND gates, said NOR gate being formed and arranged for monitoring the presence of a reset control signal from the respective vertical shift register cell and providing an output to a first said NAND gate of the decode cell of the next vertical scanning line i + 1, and to a second NAND gate of the decode cell of line i, said second NAND gate being also coupled to a global reset input, and providing an output to a third NAND gate also coupled to the output of the first NAND gate to enable sampling only at that line i at the leading edge of the block of lines being reset.

3. A device as claimed in claim 1 or claim 2 wherein is provided a reset signal control means formed and arranged for varying the duration of the reset signal.

4. A device as claimed in any one of claims 1 to 3 wherein is provided an automatic exposure control means comprising histogramming means formed and arranged for histogramming the video stream output of the device into a plurality of different pixel brightness levels, comparator means formed and arranged for comparing the histogram obtained with stored histogram data, and reset signal control means formed and arranged for increasing or decreasing the number of lines being reset in response to excursions of said histogram outside predetermined histogram profiles defined by said stored histogram data, so as to restore the video stream pixel brightness profile within said predetermined histogram profiles whereby exposure is automatically controlled so as to avoid excessively dark or excessively bright images.

5. A method of automatically electronically controlling exposure in a solid state image pick-up device comprising a two-dimensional array of sensing cells, each sensing cell having a photodiode and a transistor for reading from and writing to the photodiode, horizontal and vertical scanning means coupled to each cell of the array, wherein said vertical scanning means comprises a plurality of vertical scanning lines, each commonly connected to sensing cells arranged in a horizontal direction, and vertical shift register means having outputs connected to the vertical scanning lines for driving the vertical scanning lines with control pulses so as to cause each line to be successively reset and then sampled after a variable period defining an integration time, which method comprises the steps of providing an input to the vertical shift register so as to drive a group of successive vertical scanning lines with control signals for enabling resetting thereof during each line period, providing global sampling and reset signals to all the vertical scanning lines, and processing the signals received at each line so as to enable sampling of a vertical scanning line at the leading edge of said group of successive vertical scanning lines, monitoring the image obtained with said pick-up device and varying said input to the vertical shift register so as to increase or decrease the number of lines in said group of successive vertical scanning lines thereby to decrease or increase the integration period of the vertical scanning lines, respectively.

## Patentansprüche

1. Festkörperbildaufnahmevorrichtung mit einer zweidimensionalen Anordnung von Erfassungszellen, wobei jede Erfassungszelle eine Fotodiode und einen Transistor zum Lesen aus der Fotodiode und zum Schreiben in diese aufweist, einer horizontalen und einer vertikalen Abtasteinrichtung, die mit jeder Zelle der Anordnung gekoppelt sind, wobei die vertikale Abtasteinrichtung eine Vielzahl von vertikalen Abtastleitungen aufweist, die jeweils gemeinsam mit Abtastzellen verbunden sind, die in einer horizontalen Richtung angeordnet sind, und einer vertikalen Schieberegistereinrichtung, deren Ausgänge mit den vertikalen Abtastleitungen verbunden sind, zum Treiben der vertikalen Abtastleitungen mit Steuerimpulsen, um zu bewirken, daß jede Leitung nacheinander zurückgesetzt wird und nach einer veränderlichen Periode abgetastet wird, wobei eine Integrationszeit definiert wird, dadurch gekennzeichnet, daß die vertikale Schieberegistereinrichtung ein einzelnes vertikales Schieberegister aufweist, das ausgebildet und eingerichtet ist, um mit einem Eingangssignal getrieben zu werden, um während jeder Leitungsperiode eine Gruppe von aufeiananderfolgenden vertikalen Abtastleitungen zu treiben, und eine von Globalrücksetz- und -abtastsignalen getriebene Einrichtung vorgesehen ist, die mit jeder der Leitungen über eine Decodierzelle verbunden ist, wobei die Decodierzelle mit den Decodierzellen von vorangehenden und nachfolgenden Leitungen verbunden ist, wobei die Decodierzelle so ausgebildet und eingerichtet ist, daß die vordere Leitung der Gruppe von zurückzusetzenden Leitungen abgetastet wird, wobei die Anzahl der zurückzusetzenden Leitungen in der Gruppe die Anzahl der Leitungen in einer Gruppe vor der abgetasteten Leitung, die nicht zurückgesetzt werden, und somit die Integrationszeit bestimmt. wodurch die Integrationszeit durch Änderung des Eingangssignals des vertikale Schieberegisters geändert werden kann.

2. Vorrichtung nach Anspruch 1, wobei die Decodierzellen ein ODER-NICHT-Gatter und drei UND-NICHT-Gatter aufweisen, wobei das ODER-NICHT-Gatter ausgebildet und eingerichtet ist zum Überwachen des Vorhandenseins eines Rücksetzsteuersignals von der jeweiligen vertikalen Schieberegisterzelle und zum Liefern eines Ausgangssignals an das erste UND-NICHT-Gatter der Decodierzelle der nächsten vertikalen Abtastleitung i + 1 und an das zweite UND-NICHT-Gatter der Decodierzelle der Leitung i, wobei das zweite UND-NICHT-Gatter auch mit dem Global rücksetzeingang gekoppelt ist, und zum Liefern eines Ausgangssignal an das dritte UND-NICHT-Gatter, das auch mit dem Ausgang des ersten UND-NICHT-Gatters gekoppelt ist, um ein Abtasten lediglich in dieser Leitung i am vorderen Rand des Blocks der zurückzusetzenden Leitungen zu ermöglichen.

3. Vorrichtung nach Anspruch 1 oder 2, wobei eine Rücksetzsignalsteuereinrichtung vorgesehen ist, die zum Ändern der Dauer des Rücksetzsignals ausgebildet und eingerichtet ist.

4. Vorrichtung nach einem der Ansprüche 1 bis 3, wobei eine automatische Belichtungssteuereinrichtung vorgesehen ist mit: einer Histogrammerzeugungseinrichtung, die ausgebildet und eingerichtet ist zum histogrammgemäßen Einteilen des Videostromausgabesignals der Vorrichtung in eine Vielzahl von verschiedenen Pixelhelligkeitspegeln, einer Komparatoreinrichtung, die ausgebildet und eingerichtet ist zum Vergleichen des Histogramms, das mit gespeicherten Histogrammdaten ermittelt worden ist, und einer Rücksetzsignalsteuereinrichtung, die ausgebildet und eingerichtet ist zum Erhöhen und Verringern der Anzahl der zurückzusetzenden Leitungen als Antwort auf Sprünge des Hi stogramms aus den vorbestimmten Histogrammprofilen hinaus, die durch die gespeicherten Histogrammdaten definiert sind, um das Videostrompixelhelligkeitsprofil in den vorbestimmten Histogrammprofilen wiederherzustellen, wodurch die Belichtung automatisch gesteuert wird, um übermäßig dunkle oder übermäßig helle Bilder zu vermeiden.

5. Verfahren zur automatischen elektronischen Steuerung der Belichtung in einer Festkörperbildaufnahmevorrichtung mit: einer zweidimensionalen Anordnung von Erfassungszellen, wobei jede Erfassungszelle eine Fotodiode und einen Transistor zum Lesen aus der Fotodiode und zum Schreiben in diese aufweist, einer horizontalen und einer vertikalen Abtasteinrichtung, die mit jeder Zelle der Anordnung gekoppelt sind, wobei die vertikale Abtasteinrichtung eine Vielzahl von vertikalen Abtastleitungen aufweist, die jeweils gemeinsam mit Abtastzellen verbunden sind, die in einer horizontalen Richtung angeordnet sind, und einer vertikalen Schieberegistereinrichtung, deren Ausgänge mit vertikalen Abtastleitungen verbunden sind, zum Treiben der vertikalen Abtastleitungen mit Steuerimpulsen, um zu bewirken, daß jede Leitung nacheinander zurückgesetzt wird und nach einer variablen Periode abgetastet wird. wobei eine Integrationszeit definiert wird, wobei das Verfahren die Schritte aufweist: Liefern eines Eingangssignals an das vertikale Schieberegister, um eine Gruppe von aufeinanderfolgenden vertikalen Abtastleitungen mit Steuersignalen zu treiben, um deren Rücksetzung während jeder Leitungsperiode zu ermöglichen. zum Liefern von Globalabtast-und -Rücksetzsignalen an alle vertikalen Abtastleitungen und zum Verarbeiten der Signale, die in jeder Leitung empfangen werden, um ein Abtasten einer vertikalen Abtastleitung am vorderen Rand der Gruppe von aufeinanderfolgenden vertikalen Abtastleitungen zu ermöglichen, zum Überwachen des mit der Aufnahmevorrichtung erzeugten Bildes und zum Ändern des Eingangssignals in das vertikale Schieberegister, um die Anzahl der Leitungen in der Gruppe von aufeinanderfolgenden vertikalen Abtastleitungen zu verringern oder zu erhöhen, um dadurch die Integrationsperiode der vertikalen Abtastleitungen zu verkürzen bzw. zu verlängern.

## Revendications

1. Dispositif de saisie d'image à semi-conducteurs comprenant un réseau bidimensionnel de cellules de détection, chaque cellule de détection comportant une photodiode et un transistor pour réaliser une lecture et une écriture dans la photodiode, des moyens de balayage horizontal et vertical couplés à chaque cellule du réseau, dans lequel ledit moyen de balayage vertical comprend une pluralité de lignes de balayage vertical, chacune étant connectée en commun à des cellules de détection agencées suivant une direction horizontale, et un moyen de registre à décalage vertical comportant des sorties connectées aux lignes de balayage vertical pour piloter les lignes de balayage vertical à l'aide d'impulsions de commande de manière à forcer chaque ligne à être successivement remise à l'état initial puis échantillonnée après une période variable définissant un temps d'intégration, caractérisé en ce que le moyen de registre à décalage vertical comprend un unique registre à décalage vertical formé et agencé pour être piloté avec une entrée de manière à piloter un groupe de lignes de balayage vertical successives pendant chaque période de ligne, et sont prévus des moyens pilotés par signal global de remise à l'état initial et d'échantillonnage connectés à chacune desdites lignes via une cellule de décodage, chaque dite cellule de décodage étant connectée aux cellules de décodage de lignes précédente et suivante, lesdites cellules de décodage étant formées et agencées de telle sorte que la ligne de tête du groupe de lignes qui sont remises à l'état initial soit échantillonnée, le nombre de lignes dans le groupe qui sont remises à l'état initial déterminant le nombre de lignes dans un groupe à l'avant de la ligne échantillonnée qui ne sont pas remises à l'état initial et par conséquent le temps d'intégration de telle sorte que le temps d'intégration puisse être amené à varier de la variation de l'entrée sur le registre à décalage vertical.

2. Dispositif selon la revendication 1, dans lequel les cellules de décodage comprennent une porte NON-OU et trois portes NON-ET, ladite porte NON-OU étant formée et agencée pour surveiller la présence d'un signal de commande de remise à l'état initial provenant de la cellule de registre à décalage vertical respective et pour produire une sortie sur une première dite porte NON-ET de la cellule de décodage de la ligne de balayage vertical suivante i + 1 et sur une seconde porte NON-ET de la cellule de décodage de ligne 1, ladite seconde porte NON-ET étant également couplée à une entrée de remise à l'état initial globale et pour produire une sortie sur une troisième porte NON-ET également couplée à la sortie de la première porte NON-ET pour permettre l'échantillonnage seulement au niveau de cette ligne i lors du front avant du bloc de lignes qui sont remises à l'état initial.

3. Dispositif selon la revendication 1 ou 2, dans lequel est prévu un moyen de commande de signal de remise à l'état initial formé et agencé pour faire varier la durée du signal de remise à l'état initial.

4. Dispositif selon l'une quelconque des revendications 1 à 3, dans lequel est prévu un moyen de commande d'exposition automatique comprenant un moyen de formation d'histogramme formé et agencé pour former des histogrammes du train vidéo émis en sortie depuis le dispositif selon une pluralité de différents niveaux de luminosité de pixels, un moyen de comparateur formé et agencé pour comparer l'histogramme obtenu à des données d'histogramme stockées, et un moyen de commande de signal de remise à l'état initial formé et agencé pour augmenter ou diminuer le nombre de lignes qui sont remises à l'état initial en réponse à des excursions dudit histogramme à l'extérieur de profils d'histogrammes prédéterminés définis par lesdites données d'histogramme stockées de manière à restaurer le profil de luminosité de pixels de train vidéo dans lesdits profils d'histogrammes prédéterminés de telle sorte qu'une exposition soit commandée automatiquement de manière à éviter des images excessivement sombres ou excessivement lumineuses.

5. Procédé de commande électronique automatique d'exposition dans un dispositif de saisie d'image à semi-conducteurs comprenant un réseau bidimensionnel de cellules de détection, chaque cellule de détection comportant une photodiode et un transistor pour réaliser une lecture et une écriture dans la photodiode, des moyens de balayage horizontal et vertical couplés à chaque cellule du réseau. dans lequel ledit moyen de balayage vertical comprend une pluralité de lignes de balayage vertical, chacune étant connectée en commun à des cellules de détection agencées suivant une direction horizontale, et un moyen de registre à décalage vertical comportant des sorties connectées aux lignes de balayage vertical pour piloter les lignes de balayage vertical à l'aide d'impulsions de commande de manière à forcer chaque ligne à être successivement remise à l'état initial puis échantillonnée après une période variable définissant un temps d'intégration, lequel procédé comprend les étapes de production d'une entrée sur le registre à décalage vertical de manière à piloter un groupe de lignes de balayage vertical successives à l'aide de signaux de commande pour permettre leur remise à l'état initial pendant chaque période de ligne, de production de signaux globaux d'échantillonnage et de remise à l'état initial sur toutes les lignes de balayage vertical et de traitement des signaux reçus au niveau de chaque ligne de manière à permettre l'échantillonnage d'une ligne de balayage vertical lors du front avant dudit groupe de lignes de balayage vertical successives, de surveillance de l'image obtenue à l'aide dudit dispositif de saisie et de variation de ladite entrée sur le registre à décalage vertical de manière à augmenter ou à diminuer le nombre de lignes dans ledit groupe de lignes de balayage vertical successives pour ainsi respectivement diminuer ou augmenter la période d'intégration des lignes de balayage vertical.
